# EUROPEAN PATENT SPECIFICATION

(11) **EP 2 652 212 B1**
(45) Date of publication and mention of the grant of the patent: **30.08.2017**
(21) Application number: 11794656.6
(22) Date of filing: 13.12.2011
(51) Int. Cl.: F16H 61/4078, F15B 15/00, E02F 9/22

(54) **CLOSED LOOP DRIVE CIRCUIT WITH OPEN CIRCUIT PUMP ASSIST FOR HIGH SPEED TRAVEL**
ANTRIEBSSCHALTUNG MIT GESCHLOSSENEM REGELKREIS MIT LEERLAUFSCHALTUNGSPUMPENUNTERSTÜTZUNG FÜR HOCHGESCHWINDIGKEITSFORTBEWEGUNG
CIRCUIT D'ATTAQUE EN BOUCLE FERMÉE AVEC ASSISTANCE DE POMPE EN CIRCUIT OUVERT POUR DÉPLACEMENT À GRANDE VITESSE

(30) Priority: 14.12.2010 EP 10195026
(43) Date of publication of application: 23.10.2013
(73) Proprietor: Caterpillar Inc., Peoria, IL 61626-9510 (US)
(72) Inventor: BERG, Torsten, 01920 Steina (DE)
(74) Representative: BRP Renaud & Partner mbB Rechtsanwälte Patentanwälte Steuerberater
(86) International application number: PCT/EP2011/006287
(87) International publication number: WO 2012/079745

(56) References cited:
- EP-A1- 2 017 114
- GB-A- 2 395 769
- US-A1- 2007 062 186
- US-B2- 7 406 824

## Description

### Technical Field

The present disclosure refers to a hydrostatic drive system for a vehicle, and particularly to a hydrostatic drive system comprising an open hydraulic circuit including a main hydraulic pump configured to be driven by an internal combustion engine and to drive at least one hydraulic consumer, and a closed hydraulic circuit including an auxiliary hydraulic pump configured to drive an hydraulic motor for travelling the vehicle.

Furthermore, the present disclosure refers to a method for operating a vehicle, particularly a self-propelled construction machine such as, e.g., a wheel excavator.

### Background

Vehicles such as, e.g., self-propelled construction machines, having a hydrostatic drive system are generally exposed to extreme fluctuations with regard to the load to be handled and with regard to the vehicle speed to be realized. The internal combustion engine providing the requisite drive power for the hydrostatic drive system, and for other hydraulic consumers as, for example, air condition and so-called parasitics, is generally driven at a constant engine speed at which the internal combustion engine operates most efficiently. Only in case the requisite drive power and/or the requested power supply of the hydraulic consumers increases, the engine speed of the internal combustion engine may have to be increased.

Known vehicles having a hydrostatic drive system often include a closed circuit travel system. Such closed circuit travel systems require a large travel pump to generate sufficient flow of a hydraulic fluid during high-speed travel. Vehicles as, for example, wheel excavators or other wheled construction machines as e.g. wheel dozers, wheel loaders, wheel tractor-scrapers, underground mining machines, skid steer loaders, skidders, road reclaimers, industrial loaders, wheel compactors, feller bunchers, may be operated quite often in a low- or medium-speed travel mode, but quite rarely in a high-speed travel mode. Hence, such hydraulic drives for vehicles, which, for a major operating time, are travelled in a low or medium travel speed mode, comprise an oversized hydraulic pump for the travel system, which may result in high manufacturing costs, and which may have a negative impact on the requisite space within the vehicle, and which may negatively impact the performance of the vehicle.

Some hydraulic circuit construction designs for working machines are known from WO 2009/084853 A2, US 7,581,392 B2, US 2008/0223027 A1, US 7,281,373 B2, US 2010/0094515 A1, and US 3,952,510.

GB 2 395 769 A generally refers to a cavitation prevention system of a hydraulic driven vehicle.

DE 2 142 946 refers to a hydraulic assembly for maintaining a tension stress of a band-like material running between two transport rollers.

US 2009/0248259 A1 shows a travelling system for construction equipment, which can secure an initial travelling manipulability regardless of a low-speed travelling or a high-speed travelling. If the high-speed travelling is selected and the travelling is manipulated, the inclination angle of a swash plate of a hydraulic pump is variably controlled so that the discharge flow rate of the hydraulic pump exceeds a predetermined flow rate in comparison with the low-speed travelling.

US 3,916,767 refers to a hydraulic control system that includes a main hydraulic control circuit for the propulsion of the vehicle. The main hydraulic control circuit includes a fluid reservoir and main pump means for supplying hydraulic fluid under pressure from the reservoir through conduit means to control valves. The hydraulic circuit also includes a pair of fixed displacement hydraulic motors, each drivingly connected with a pair of wheels. A device is used to selectively allow an auxiliary pump means to supply additional fluid under pressure from the reservoir to the control valves to operate hydraulic devices such as the hydraulic motors at a higher speed. The main hydraulic control circuit and the hydraulic circuit including the auxiliary pump means are designed as open hydraulic circuits. Accordingly, it may be not possible to change the travelling speed of the vehicle in a low travel speed mode and/or a high-travel speed mode with the desired smoothness.

Another hydrostatically driven vehicle with retarder valve is disclosed in US 6,202,783 B1. The disclosed vehicle has a hydrostatic drive and a hydraulic control apparatus. The hydrostatic drive includes a variable displacement hydraulic pump and a hydraulic motor in a closed circuit. An internal combustion engine is configured to drive the hydraulic pump and a variable displacement pump of an open circuit. A retarder valve has a valve and a pressure-limiting valve connected thereto, for throttling the volumetric output flow of the variable displacement pump.

US 6,336,518 B1 refers to a travel assisting hydraulic circuit for hydraulic drive type working vehicles with enhanced general versatility, in which the travelling assisting circuit during travel at a high speed can be configured to be a simple circuit. For this purpose, in a hydraulic drive type working vehicle including a travelling HST circuit having a travelling pump driven by the power of an engine, and a travelling motor driven by the pressurized oil from the travelling pump. The output torque of the travelling motor is transmitted to a drive wheel via a speed reducer. The travelling assisting hydraulic circuit includes an assisting pump driven by the power of the engine, and an assisting motor for outputting the torque generated by being driven by the pressurized oil from the assisting pump to the speed reducer to add the torque to the output torque of the travelling motor.

US 5,946,910 shows a hydraulic circuit for a hydraulically driven working vehicle which allows the vehicle to travel at an almost constant speed during high-speed travelling. The shown hydraulic circuit has a hydraulic travel pump and a working machine hydraulic pump which are driven by the power of an engine for discharging pressurized oil to an HST travel circuit and a working machine driving hydraulic circuit, respectively. Pressurized oil from the working machine hydraulic pump joins pressurized oil from the hydraulic travel pump to effect high-speed travelling, while pressurized oil from the hydraulic travel pump joins pressurized oil in the working machine hydraulic pump to generate a large digging force to effect digging. Again, all hydraulic circuits are designed as open hydraulic circuits.

US 7,604,300 B2 discloses a dump truck or large mining truck, comprising various hydraulic circuits. Two or more hydraulic circuits may be connected to one another by a valve device which is controlled by a control device such that the plurality of hydraulic circuits cooperate in an unloading mode and actuate a dump body together and, on the other hand, the hydraulic circuits work separately in the travel mode so that the second hydraulic circuit and/or any further hydraulic circuit is separated from the dump body and its actuator device.

US 2007/0062186 A1 shows an auxiliary pump assembly for a hydrostatic transmission that operates at a reduced pressure when the auxiliary circuit is not in use, and operates at an increased pressure when the auxiliary circuit is in use. The auxiliary pump assembly can be used to supply low pressure make up flow to a closed loop of a hydrostatic transmission. A combination valve including a bypass valve and a relief valve is also provided. This known auxiliary pump assembly may only be operable to compensate a loss of hydraulic fluid due to leakage within the closed circuit. Therefore, only one single pump is provided. A separate small sized auxiliary pump typically provided within the closed circuit for compensating any leakage occurring in the closed circuit shall probably be omitted. Due to this arrangement the system may not be able to increase the driving speed of the closed circuit, and, consequently, may not be able to move the vehicle provided with this hydraulic drive faster.

US 7 406 824 B2 discloses a hydrostatic transmission circuit with replenishing for a vehicle. The circuit comprises a main hydraulic pump, two main ducts, a booster pump, a hydraulic motor which comprises two elementary motors for driving a first displacement member, and a second hydraulic motor for driving a second displacement member.

EP 2 017 114 A1 shows a hydrostatic drive system for a vehicle having an open circuit and a closed circuit. A main hydraulic pump is configured to be driven by an internal combustion engine and part of the open circuit. This main hydraulic pump supplies at least one hydraulic consumer. An auxiliary hydraulic pump within the closed circuit combined with a hydraulic motor are operated to travel the vehicle. The main hydraulic pump is connected to the closed circuit via a 4-/2 way valve. A throttle is arranged downstream of the 4-/2 way valve within the connecting line. The closed circuit is connected to a drain line via another throttle such that excessive hydraulic fluid can be drained to a tank. Accordingly, the volume of the hydraulic fluid pumped by the main hydraulic pump into the closed circuit may be limited, and a separate drain line and a separate throttle are necessary for draining excessive hydraulic fluid in the closed circuit

The present disclosure is directed, at least in part, to improving or overcoming one or more aspects of prior systems.

### Summary of the Disclosure

In one aspect the present disclosure is directed to a hydrostatic drive system for a vehicle. The hydrostatic drive system for a vehicle comprises an open circuit, a closed circuit, and a proportional 2/2-way valve (in the following referred to as combiner valve) connected to both the open circuit and the closed circuit. The open circuit includes a main hydraulic pump configured to be driven by an internal combustion engine, and configured to drive at least one hydraulic consumer. The closed circuit includes an auxiliary hydraulic pump configured to travel the vehicle and a hydraulic motor connected to the auxiliary hydraulic pump. A pressure-limiting valve is sized and configured to drain all amount of the hydraulic fluid exceeding the maximum capacity of the auxiliary pump provided within the closed circuit to a reservoir, even if additional hydraulic fluid is diverted from the open circuit into the closed circuit. The combiner valve is configured to connect the main hydraulic pump with the hydraulic motor, such that at least a part of the hydraulic fluid from the open circuit is diverted into the closed circuit and the hydraulic motor is able to absorb more power from the engine than by using the dedicated auxiliary hydraulic pump only.

The pressure limiting valve is sized and configured to drain all amount of hydraulic fluid exceeding the maximum capacity of the auxiliary pump in the closed circuit, even if additional hydraulic fluid is supplied into the closed circuit via the combiner valve. Accordingly, additional cooling may be achieved in the closed circuit, or additional hydraulic energy can be introduced into the closed circuit, but no additional draining lines or valves is necessary. Only an adapted typical purge valve already provided within the closed circuit might be sufficient. Hence, the disclosed hydraulic drive system arrangement may comprise a single pressure limiting valve as part of a typical purge valve arrangement provided in closed circuits used as a hydraulic drive circuit.

Generally, it may be sufficient to connect the main hydraulic pump with the corresponding travel motor line, working as inlet line, while forward traction mode. However, it may also be appropriate to connect the main hydraulic pump to the corresponding hydraulic motor line during reverse traction mode of the vehicle.

The hydraulic motor is able to provide more power than without the additional hydraulic fluid supply from the open circuit. Hence, the described hydrostatic drive system provides additional power to be directed to the hydraulic motor even if the auxiliary hydraulic pump already supplied its maximum power to the hydraulic motor. Automatically, an excessive hydraulic fluid volume is drained out of the closed circuit into a reservoir via a flush and boost pressure valve unit. Such a flush and boost pressure valve unit may be constructed as known in the prior art and as may be used in a closed travel circuit. The pressure-limiting valve may be part of such a flush and boost pressure valve unit. A flush and boost pressure valve unit might be identical with a purge valve arrangement. The two terms may be used for the same valve arrangement.

In a further aspect the present disclosure is directed to a method of operating a vehicle according to claim 9. The method comprises the steps of running a main hydraulic pump arranged within an open circuit so that hydraulic fluid circulates in the open circuit, and simultaneously running an auxiliary hydraulic pump arranged within the closed circuit so that an hydraulic motor connected to the auxiliary hydraulic pump is able to absorb a certain power below a power threshold. If a desired power requirement or desired travel speed is higher than a corresponding threshold, at least a part of the hydraulic fluid from the open circuit may be diverted into the closed circuit such that the hydraulic motor is able to absorb more power and accordingly, the vehicle is still able to accelerate and achieve a higher travel speed.

In another aspect the present disclosure is directed to a method of operating a vehicle. The method may comprise the steps of running a main hydraulic pump arranged within an open circuit so that hydraulic fluid circulates in the open circuit, and simultaneously running an auxiliary hydraulic pump arranged within the closed circuit so that a hydraulic motor connected to the auxiliary hydraulic pump may provide a certain power. If the vehicle is supposed to accelerate at the maximum, the main pump may start to supply hydraulic fluid to the closed circuit drive train as soon as the auxiliary pump has achieved the maximum displacement. This may result in a best usage of the available combustion engine power.

The power threshold may be set such that the maximum power output of the auxiliary hydraulic pump is sufficient to travel the vehicle at a low to middle high travel speed. In addition, it may be considered that the percentage of the available output of the main hydraulic pump usable for assisting the output of the auxiliary hydraulic pump during travel speeds higher than the travel speed threshold may be sufficient to accelerate the vehicle even if the auxiliary hydraulic pump is already operating at about its maximum output, and accordingly, even high travel speeds and particularly the maximum travel speed of the vehicle may be achieved. For example, additional hydraulic fluid may be diverted into the closed circuit at a travel speed of the vehicle of 8-10 km/h.

The travel speed threshold may be set such that the maximum power output of the auxiliary hydraulic pump is sufficient to travel the vehicle at a low to middle high travel speed. In addition, it may be considered that the percentage of the available output of the main hydraulic pump usable for assisting the output of the auxiliary hydraulic pump during travel speeds higher than the travel speed threshold may be sufficient to travel the vehicle at high travel speeds and particularly at the maximum travel speed of the vehicle.

A low or medium travel speed may include travelling a vehicle by an hydrostatic drive system below a travel speed threshold within a range of, e.g., about 10 to 30 km/h, and particularly, e.g., of about 20 to 25 km/h. A high-speed travel speed mode may include travelling the vehicle above the travel speed threshold, for example, within a travel speed range of about 10 km/h to 40 km/h, or even at higher vehicle speeds.

A travel speed threshold may be set such that the maximum power output of the auxiliary hydraulic pump is sufficient to travel the vehicle at a low to middle travel speed. In addition, it may be considered that the percentage of the available output of the main hydraulic pump usable for assisting the output of the auxiliary hydraulic pump during travel speeds higher than the travel speed threshold may be sufficient to travel the vehicle at high travel speeds and particularly at the maximum travel speed of the vehicle.

With respect to controllability of one of the methods disclosed herein it may be appropriate to divert hydraulic fluid from the open circuit into the closed circuit only if the vehicle may operate in a condition where the main hydraulic pump is normally not used to supply another hydraulic consumer in the open circuit anyway; e.g. travelling on a public road; during this operation mode all other hydraulic consumers have to be disabled anyway.

Other features and aspects of this disclosure will be apparent from the following description and the accompanying drawings.

### Brief Description of the Drawings

Fig. 1 is a diagrammatic illustration of a wheel excavator configured to travel by means of a hydrostatic drive system according to an exemplary disclosed embodiment;
Fig. 2 is a diagrammatic illustration of a hydrostatic drive system for a vehicle, which may comprise an open circuit and a closed circuit according to an exemplary disclosed embodiment; and
Fig. 3 is a diagrammatic illustration of a principle flow chart of a method of operating a vehicle according to an exemplary disclosed embodiment.

### Detailed Description

Reference will now be made in detail to the drawings. Wherever possible, the same reference numeral will be used throughout the drawings to refer to the same or like parts.

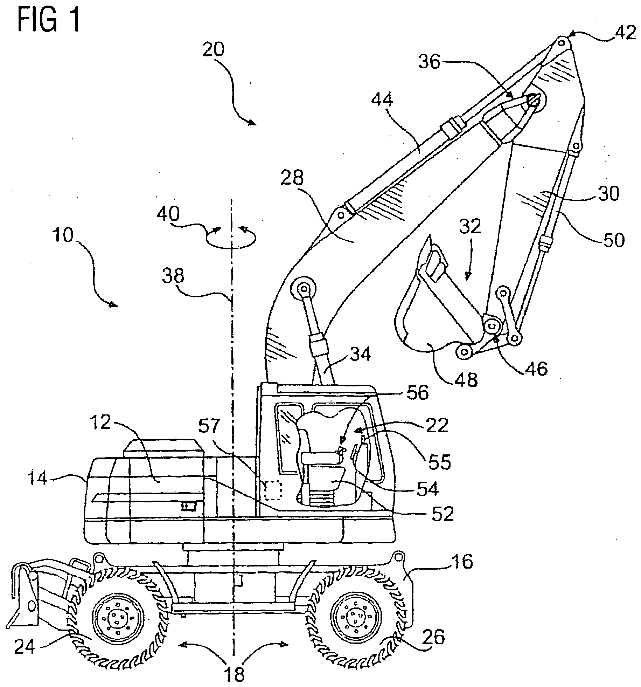

Fig. 1 shows a vehicle 10 as, e.g., a wheel excavator. Vehicle 10 may include a power source 12, and a frame 14, which may be operably attached to a base 16. Vehicle 10 may also include a traction system 18, e.g. a plurality of wheels 17, which may be operably attached to base 16. In addition, vehicle 10 may include a work implement 20 and an operator station 22 from which work implement 20 may be controlled.

Vehicle 10, although shown in Fig. 1 as a wheel excavator, may be any type of work machine with operator-controlled steering and travelling. For example, vehicle 10 may include wheel loaders, motor graders, backhoe loaders, skid steers, track-type tractors, tracked excavators, and any other type of work machine with operator-controlled steering and travelling.

Frame 14 may be fixedly mounted on base 16. Alternatively, frame 14 may be rotatably mounted on base 16. As yet another alternative, frame 14 may be mounted to base 16 in a slidable fashion or any other configuration. In addition, vehicle 10 may include a cab riser function, by which frame 14 may be raised and lowered relative to base 16. Alternatively or additionally, the cab riser function may cause operator station 22 to be raised and lowered relative to frame 14. The cab raiser function may be hydraulically actuated.

Traction system 18 may include at least one traction device, such as, for example, a first set of wheels 24 and a second set of wheels 26, as shown in Fig. 1. At least one set of wheels may be steerable. Vehicle 10 may be configured with two-wheel or four-wheel steering. Further, a steering configuration may be selectable between two-wheel and four-wheel steering, or the operator may switch which set of wheels is steerable.

While traction system 18 has been shown to include wheels, the present disclosure may also apply to work machines or vehicles with one or more endless tracks and/or belts, or any other type of traction device. In addition, the present disclosure may apply to steering systems that vary a steering angle of one or more traction devices, as well as skid steer, and differential steering systems. Further, these systems may each apply to work machines with a variety of types of traction devices. For example, while track type work machines are commonly configured with skid steer or differential steering systems, they may alternatively, or additionally, be configured with steering systems that vary a steering angle of one or more tracks. Similarly, wheeled work machines or vehicles may steer with a variable steering angle system, skid steer, and/or differential steering systems.

Work implement 20 may be any type of work implement and may include any type of work tool, such as, for example, a bucket, blade, grapple, jackhammer, shears, etc.

As shown in Fig. 1, work implement 20 may include a boom 28, a stick 30, and a work tool 32 attached to the end of stick 30. Boom 28 may be pivotably attached to frame 14. A boom actuator 34 may be attached to frame 14 and boom 28, such that a distal end 36 of boom 28 may be raised and lowered by actuation of boom actuator 34.

Distal end 36 of boom 28 may also be moved side-to-side. In the exemplary embodiment shown, boom 28 may be moved side-to-side by rotation of frame 14 relative to base 16 about an axis 38 in a direction indicated by an arrow 40. For purposes of this disclosure, the side-to-side movement of work implement 20 via rotational movement of frame 14 relative to base 16 shall be referred to as "swing". Vehicle 10 may also include an offset boom function by which boom 28 may be pivoted side-to-side relative to frame 14.

Stick 30 may be pivotably attached to boom 28 at a proximal end 42. A stick actuator 44 may be attached to boom 28 and stick 30 such that actuation of stick actuator 44 may cause stick 30 to extend and retract with respect to boom 28 in a manner of a jackknife. That is, a distal end 46 of stick 30 may be extended further away from frame 14, and retracted closer to frame 14 by actuating stick actuator 44.

Work tool 32 may be attached to distal end 46 of stick 30. While work tool 32 has been illustrated in Fig. 1 as a bucket 48, work tool 32 may be any type of work tool. Work tool 32 may be pivotably attached to distal end 46 of stick 30. A work tool pivot actuator 50 may be attached to stick 30 and work tool 32 such that actuation of work tool pivot actuator 50 may cause work tool 32 to pivot relative to stick 30.

Operator station 22 may be a cab as illustrated in Fig. 1, and may be attached to or integral with frame 14. Operator station 22 may include an operator seat 52, a first steering device, such as, for example, a steering wheel 54, a display 55, and at least one hand-operated work implement control device 56, e.g. a joystick. Steering wheel 54 may be operatively coupled to a first set of wheels 24 and/or second set of wheels 26 so as to control their directional movement. Steering wheel 54 may tilt and/or telescope relative to operator seat 52 in order to facilitate ingress and egress, or to provide a more open cab while operating other control devices. For example, steering wheel 54 may be tilted and/or telescoped out of the way while a secondary steering control system is active. Vehicle 10 may include two work implement control devices, one on each side of operator seat 52.

Work implement control device 56 may control multiple functions of vehicle 10, as, for example, operation of work implement 20 (including movements of boom 28, stick 30, and work tool 32), swing, propulsion of vehicle 10, steering, the cab raiser function, the offset boom function, etc.

Boom actuator 34, stick actuator 44, and work tool pivot actuator 50 may be any kind of actuators, such as, for example, hydraulic cylinders as shown in Fig. 1. Each hydraulic cylinder may be associated with its own hydraulic circuit in order to be independently controlled. Some work tools, such as bucket 48, may have a single actuator, and thus may be controlled by a single hydraulic circuit. Other types of work tools, such as grapple may include more than one actuator, and thus may be controlled by more than one hydraulic circuit. For example, grapple may be controlled by two or more hydraulic circuits. One circuit may control work tool pivot actuator 50, which may pivot the grapple in the same manner as it does bucket 48. Additionally, a second circuit may control an auxiliary function, such as rotation of the grapple.

One or more of the boom actuator 34, stick actuator 44, work tool pivot actuator 50 and all the others, like hydraulic cylinders, may be driven by one or more open hydraulic circuits 100.

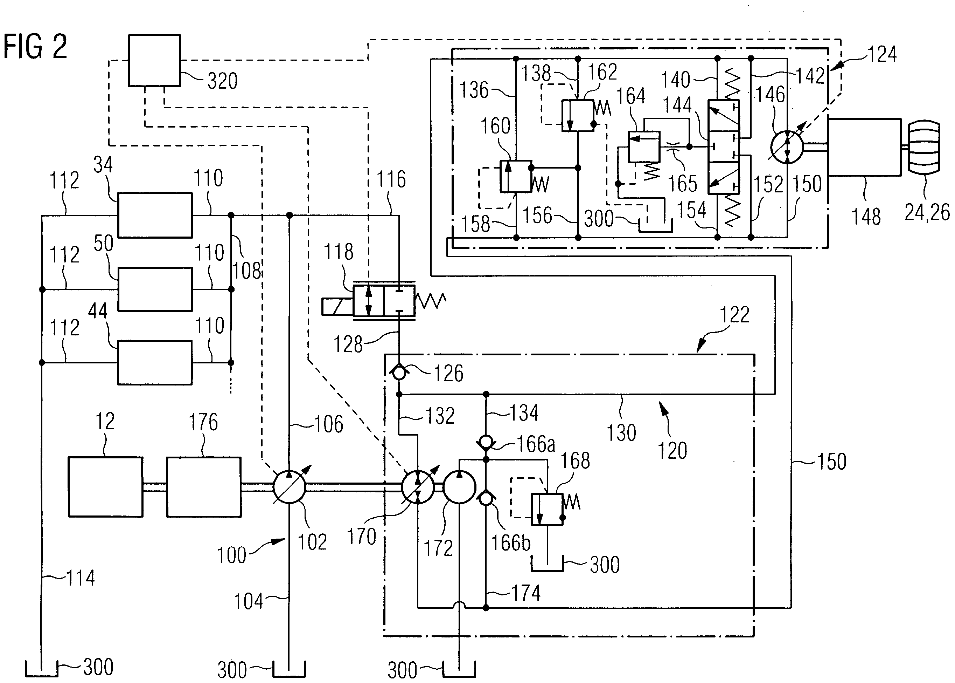

The wheel excavator 10 as shown in Fig. 1 may be equipped with a hydraulic drive as schematically shown in Fig. 2. This hydraulic drive may comprise a travel pump unit 122 and a travel motor unit 124. The travel pump unit 122 may include an auxiliary hydraulic pump 170, which may also be driven by diesel engine 12. Auxiliary hydraulic pump 170 may be configured as a variable displacement pump. As shown in Fig. 2, the auxiliary hydraulic pump 170 may also be operated as a hydraulic motor. Auxiliary hydraulic pump 170 may be connected via a hydraulic line 132 to a hydraulic motor 146 of travel motor unit 124. A branch of hydraulic line 132 may end at a check valve 126, which may be connected to a proportional 2/2-way valve 118. Auxiliary hydraulic pump 170 may also be connected to a discharge side of hydraulic motor 146 via a hydraulic line 150.

In one exemplary embodiment of the present disclosure a further combiner valve and a further check valve may be provided such that the main hydraulic pump may be able to supply hydraulic fluid in supply line during reverse travel of the vehicle

Another branch hydraulic line 134 connects to hydraulic line 132 and ends at a check valve 166. A further hydraulic line 174 may also be connected to check valve 166b and 150.

Another hydraulic pump 172 may be arranged in travel pump unit 122. Further, hydraulic pump 172 may also be driven by internal combustion engine 12. Further, hydraulic pump 172 may be connected to reservoir 300 and via check valves 166a and 166b to hydraulic line 132 and hydraulic line 150.

A pressure regulator valve 168 may be connected to an output side of further hydraulic pump 172 and check valves 166a/166b. Pressure regulating valve 168 may also be connected to reservoir 300.

In travel motor unit 124, a three-way valve 144 may be arranged in parallel to hydraulic motor 146. Three-way valve 144 may be connected to hydraulic line 130 and hydraulic line 150 via hydraulic lines 140, 154, and via hydraulic lines 142 and 152. A throttle or orifice 165 may be connected to three-way valve 144 and to a pressure-limiting valve 164 (may also be referred to as a "flush valve"). Pressure limiting valve 164 may also be connected to reservoir 300. Valve 144 and valve 164 may form a flush and boost pressure valve unit.

In addition, two SDBV valves 162 and 160 may be connected to hydraulic lines 130 and 150 via hydraulic lines 136, 138, 156, 158..

Internal combustion engine 12 may be operatively connected to air conditioning and other parasitics like hydraulic actuators or the like and to a main hydraulic pump 102. Main hydraulic pump 102 may be constructed as a variable displacement pump. Main hydraulic pump 102 may be part of open hydraulic circuit 100. Main hydraulic pump 102 may be connected to reservoir 300 via a hydraulic line 104. A hydraulic line 106 may be connected to a hydraulic line 116 and 110. Hydraulic line 116 may end at combiner valve 118. Hydraulic lines 110, 108 may be connected to hydraulic consumers like boom actuator 34, stick actuator 44, and work tool pivot actuator 50. Other hydraulic consumers may also be connected via hydraulic lines 110 to the open hydraulic circuit and main hydraulic pump 102. Hydraulic lines 112 open into a hydraulic line 114 connected to reservoir 300.

An electronic control unit 320 may be connected to main hydraulic pump 102, auxiliary hydraulic pump 170, combiner valve 118, and hydraulic motor 146.

In another exemplary embodiment of the present disclosure hydraulic line 130 may be connected to a pressure sensors (not shown) measuring the inlet pressure of travel motor while travelling forward. Hydraulic line 150 may be connected to a further pressure sensor (not shown) measuring the inlet pressure of travel motor while travelling backward.

### Industrial Applicability

A vehicle such as, e.g. a wheel excavator 10 as shown in Fig. 1, including a travel system as schematically shown in Fig. 2 may be operated as follows. An operator may adjust the desired travel speed via steering wheel 54 or another control device as, for example, a pedal in the area of the operator seat 52 within operator station 22 as shown in Fig. 1. A corresponding signal may be transmitted to electronic control unit 320. If the desired travel speed of wheel excavator 10 is below a travel speed threshold, combiner valve 118 remains in the position shown in Fig. 2, i.e. hydraulic line 116 is not connected to hydraulic line 128. Accordingly, in case the main hydraulic pump 102 outputs a volumetric flow of hydraulic fluid, the total hydraulic fluid under pressure may be guided to one or more of hydraulic consumers 34, 44, 50. When this hydraulic fluid circulating in the open circuit 100 leaves the hydraulic consumers 34, 44, and/or 50, the total hydraulic fluid flows to reservoir 300.

Simultaneously, auxiliary hydraulic pump 170 may output a volumetric flow of hydraulic fluid under pressure into hydraulic line 132 and via hydraulic line 130 to hydraulic motor 146. Hydraulic motor 146 may then via gearbox 148 drive one or more wheels 24, 26 with the corresponding rotational speed such that excavator 10 travels as desired. Hydraulic fluid flows then from hydraulic motor 146 via hydraulic line 150 back to auxiliary hydraulic pump 170. Due to the closed hydraulic circuit of this travel unit, the auxiliary hydraulic pump 170 may be designed with a smaller size compared to the size of a hydraulic pump necessary for travelling the wheel excavator 10 with a maximum speed. The auxiliary hydraulic pump 170 may only have a maximum capacity to travel or propel the wheel excavator 10 with a relatively low travel speed, particularly lower than a travel speed threshold, but due to the additional hydraulic energy diverted from the open circuit into the closed circuit the wheel excavator may be travelled tot the desired maximum travel speed, which is higher than the maximum travel speed obtainable by the auxiliary hydraulic pump 170 due to its (reduced) size, i.e. its maximum capacity.

Electronic control unit 320 may adjust the auxiliary hydraulic pump 170 and/or the hydraulic motor 146 such that a relatively low travel speed of wheel excavator 10 can be achieved.

In case that a higher travel speed is desired, i.e. faster than the travel speed threshold, which may correspond to the maximum power capacity of auxiliary hydraulic pump 170, electronic control unit may switch combiner valve 118 from the position shown in Fig. 2 to a position such that there is a connection between hydraulic lines 116 and 128. Consequently, at least a part of hydraulic fluid output by main hydraulic pump 102 may divert into closed hydraulic circuit 120 as soon as the displacement of main hydraulic pump 102 is deflected accordingly by electronic control unit 320. As a result, the output flows of auxiliary hydraulic pump 170 and main hydraulic pump 102 may combine and drive hydraulic motor 146. Due to the combined hydraulic flows from auxiliary hydraulic pump 170 and (at least a part of) main hydraulic pump 102, hydraulic motor 146 may receive more power than before and may run with higher rotational speed such that a travel speed of wheel excavator 10 may be achieved which is higher than the travel speed threshold.

If high speed mode is requested, typically, the hydraulic consumers supplied by main hydraulic pump 102 have to be disabled for legal reasons anyway. As a consequence combiner valve 118 may be opened completely and the displacement of main hydraulic pump 102 is controlled via electronic control unit 320. The algorithm may evaluate the difference between requested speed (given i.e. by a travel pedal) and real speed (provided by, e.g., a speed sensor) to calculate a suitable main pump displacement.

Another exemplary embodiment of the present disclosure may be as follows. If main hydraulic pump 102 supplies hydraulic consumers as, e.g., the actuators 34, 44, and 50, at the same time as main hydraulic pump 102 is requested to divert hydraulic fluid into closed circuit 120, i.e. the drive train, combiner valve 118 may remain in an interim position to reduce the pressure level of main hydraulic pump 102 to the requested amount in the inlet line of drive train circuit 120. This may be especially the case if hydraulic consumers in open circuit 100 work at a higher pressure level than the requested pressure level for the inlet line 130 of drive train circuit 120.

Combiner valve 118 constructed as a proportional valve may be appropriate. It should also possible to supply drive train circuit 120 while other open circuit consumers are active too, or a more smooth connecting/disconnecting of main hydraulic pump 102 is desired.

Although auxiliary hydraulic pump 170 is not sized to drive hydraulic motor 146 such that wheel excavator 10 can travel with a travel speed higher than the travel speed threshold, a travel speed of wheel excavator 10 may be achieved which is higher than the travel speed threshold due to a switch on open circuit 100 to closed circuit 120 so that at least a part of hydraulic fluid from open circuit 100 may combine with hydraulic fluid circulating in closed circuit 120.

In addition boost pump 172 may not be sized to supply the high hydraulic fluid rate necessary for an operation mode during which hydraulic oil from open circuit 100 is diverted into closed circuit 120. The hydraulic fluid supplied by main hydraulic pump 102 may have the following additional functions:
a) transport of additional hydraulic energy to hydraulic motor 146;
b) additional cooling of closed circuit 120;
c) providing higher hydraulic fluid amounts for compensation of any hydraulic fluid leckage in closed circuit 120.

As the closed hydraulic circuit 120 is not designed to circulate combined hydraulic fluid flows from open circuit and closed circuit, flush and boost pressure valve unit 144, 165, 164 (valves 162, 160 are not able to flush out but put only hydraulic fluid from side A to B or B to A if the system pressure is achieved) are used to drain excessive hydraulic fluid into reservoir 300. In case that a certain preset pressure difference is achieved in closed circuit 120, the position of three-way valve 144 may change such that throttle (orifice) 165 may be connected to hydraulic line 142 or 152. As a result, hydraulic fluid may flow via hydraulic lines 142 or hydraulic line 152 via throttle (orifice) 165 to valve 164 and may drain into reservoir 300.

As reservoir 300 is able to contain a large volume of hydraulic fluid, hydraulic fluid heated within the closed circuit 120 may mix with cool hydraulic fluid within reservoir 300. Accordingly, main hydraulic pump 102 may suck in relatively cool hydraulic fluid and pump it again, at least partly, via combiner valve 118 into closed loop circuit 120.

Travel speed of wheel excavator 10 may be changed even if the travel speed is above the travel speed threshold by adjusting the volumetric output of main hydraulic pump 102 and/or auxiliary hydraulic pump 170 and/or other components of travel pump unit 122 or travel motor unit 124.

As normally during high-speed travel of wheel excavator 10 parasitics 176 and or other hydraulic consumers like actuators 34, 44, 50 do not have to be operated, usage of main hydraulic pump 102 for assisting performance of auxiliary hydraulic pump 170 shall be possible.

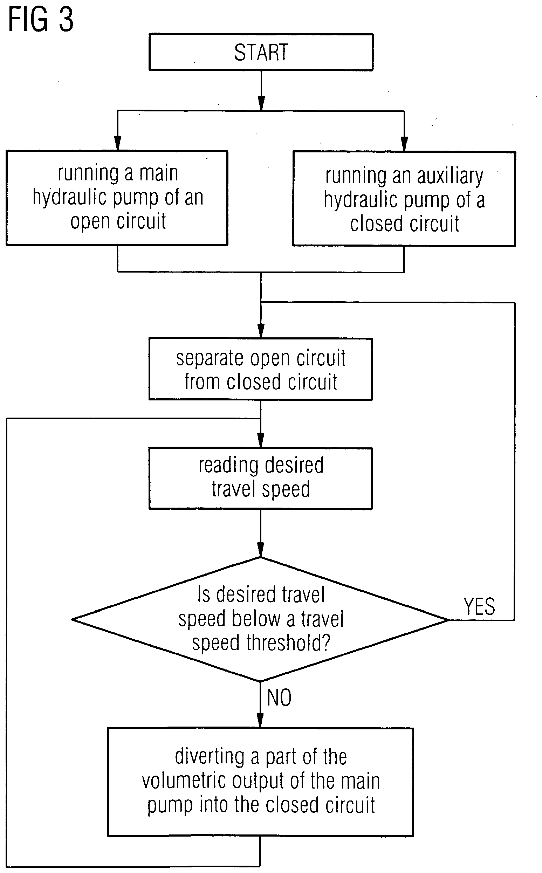

The corresponding diagrammatical flow chart of this method of operating a vehicle is shown in Fig. 3. Both main hydraulic pump 102 and auxiliary hydraulic pump 170 are run. Normally, combiner valve 118 disconnects or separates open circuit 100 from closed circuit 120. The desired travel speed may be detected very often. If the desired travel speed is below travel speed threshold, than combiner valve 118 is not actuated, i.e. it still disconnects or separates open circuit 100 and closed circuit 120 from each other. In case that the desired travel speed exceeds travel speed threshold, combiner valve 118 may be actuated and, as a result, a part of the volumetric output of main hydraulic pump 102 is diverted into closed circuit 120 (in addition, electronic controller 320 may increase the displacement of main hydraulic pump 102). The flow rate of hydraulic fluid diverted from the open circuit into the closed circuit may be adjusted according to the desired travel speed, which may be higher than the travel speed threshold. As soon as the desired travel speed falls again below the travel speed threshold the combiner valve may be deactivated such that it return into the position shown in Fig. 2, i.e. open circuit 100 is again disconnected from closed circuit 120.

A benefit of the present disclosure may be that a flush and boost valve arrangement generally provided in a closed circuit configured for travelling a vehicle as a means for controlling heating within the closed circuit, is used during switching on the open circuit to the closed circuit as a means for draining excessive hydraulic fluid supplied from the open circuit into the closed circuit. In addition, even without increasing the size of the auxiliary hydraulic pump of the closed circuit higher travel speeds may be reached. Accordingly, small sized auxiliary hydraulic pumps may be used for vehicles constructed to travel at high travel speeds because of using the main hydraulic pump of the open circuit generally provided. In addition, the boost pump may be sized even smaller as usual (if compared to vehicle constructed to travel within the same travel speed range). Hence, costs for such a boost pump may be lowered, and energy losses may be reducedThe auxiliary pump may also be named as "travel pump", and the hydraulic motor may also be named as "travel motor".

The expressions "open circuit" or "open hydraulic circuit" as used herein are synonyms for the identical subject-matter. The same applies to the expressions "closed circuit" and "closed hydraulic circuits".

The technical term "open circuit" may refer to a hydraulic circuit in which a hydraulic pump takes the total hydraulic fluid from a reservoir, and after the hydraulic fluid was supplied to a hydraulic consumers as, e.g., a hydraulic motor or an actuator, by means of the hydraulic pump the total hydraulic fluid returns to a reservoir. The reservoirs of the open circuit may be the same or may be different ones.

The technical term "closed circuit" may refer to a hydraulic circuit in which at least a part of the hydraulic fluid, which was supplied to a hydraulic consumer as, e.g., a hydraulic motor or an actuator, by means of a hydraulic pump returns to the hydraulic pump. A part of the hydraulic fluid circulating in the closed circuit may be guided to a reservoir, but at least a part of the total hydraulic fluid is returned to the hydraulic pump, particularly a major percentage of the total hydraulic fluid circulating in the closed circuit.

The technical terms "flush valve" and "purge valve" may be synonymously used for the same subject-matter.

A vehicle according to the present disclosure may be configured as, e.g. a wheel excavator, a wheel dozer, a wheel loader, a wheel tractor-scraper, a wheeled underground mining machine, a skid steer loader, a skidder, a road reclaimer, a wheeled industrial loader, a wheel compactor, or a feller buncher.

In another aspect of the present disclosure the method and hydrostatic drive system as described herein may also be amended such that in specific conditions the auxiliary hydraulic pump is connected to the main hydraulic pump via the combiner valve resulting in that the hydraulic fluid under pressure output from the auxiliary hydraulic pump is diverted to the open circuit for providing additional power to the open circuit, e.g., to supply hydraulic consumers connected to the open circuit and supplied by the main hydraulic pump.

Although the preferred embodiments of this invention have been described herein, improvements and modifications may be incorporated without departing from the scope of the following claims.

## Claims

1. A hydrostatic drive system for a vehicle (10), comprising:
an open circuit (100) including:
a main hydraulic pump (102) configured to be driven by an internal combustion engine (12), and configured to drive at least one hydraulic consumer (34, 44, 50);
a closed circuit (120) including:
an auxiliary hydraulic pump (170) configured to travel the vehicle (10);
an hydraulic motor (146) connected to the auxiliary hydraulic pump (170); and
a pressure-limiting valve (164) sized and configured to drain all amount of the hydraulic fluid exceeding the maximum capacity of the auxiliary pump (170) provided within the closed circuit (120) to a reservoir (300) even if additional hydraulic fluid is diverted from the open circuit (100) into the closed circuit (120);
a proportional 2/2-way valve (118) connected to both the open circuit (100) and the closed circuit (120), the proportional 2/2-way valve (118) being configured to connect the open circuit (100) to the closed hydraulic circuit (120) such that at least a part of the hydraulic fluid circulating in the open circuit (100) is diverted into the closed circuit (120) and the hydraulic motor (146).

2. The hydrostatic drive system for a vehicle (10) of claim 1, wherein a single pressure-limiting valve (164) is provided as part of a purge valve arrangement (144).

3. The hydrostatic drive system for a vehicle (10) of claim 2, wherein the purge valve arrangement (144) is connected in parallel to the hydraulic motor (152), and the pressure-limiting valve (164) is connected to the reservoir (300).

4. The hydrostatic drive system for a vehicle (10) of claim 2 or 3, wherein the purge valve arrangement comprises a three-way valve (144) arranged in parallel to the hydraulic motor (146), a throttle orifice (165) connected to the three-way valve (144) and to the pressure-limiting valve (164).

5. The hydrostatic drive system for a vehicle (10) of any one of the preceding claims, further comprising an electronic control unit (320) connected to the main hydraulic pump (102), the auxiliary hydraulic pump (170), the hydraulic motor (146), and the proportional 2/2-way valve (118), the electronic control unit being configured to control the main hydraulic pump (102), the auxiliary hydraulic pump (170), the hydraulic motor (146), and the proportional 2/2-way valve (118) such that a required power is available at the hydraulic motor (146).

6. The hydrostatic drive system for a vehicle (10) of any one of the preceding claims, wherein at least one of the main hydraulic pump (102) and the auxiliary hydraulic pump (170) is constructed as a variable displacement hydraulic pump.

7. The hydrostatic drive system for a vehicle (10) of any one of claims 1-6, wherein the proportional 2/2-way valve (118) is configured as an on/off valve.

8. A method of operating a vehicle (10), comprising the steps of:
running a main hydraulic pump (102) arranged within an open circuit (100) so that hydraulic fluid circulates in the open circuit (100);
simultaneously running an auxiliary hydraulic pump (170) arranged within a closed circuit (120), for supplying power to an hydraulic motor (146);
if the power provided by the auxiliary hydraulic pump (170) is less than required, diverting at least a part of the hydraulic fluid circulating in the open circuit (100) into the closed circuit (120); and
flushing all amount of hydraulic fluid exceeding the maximum capacity of the auxiliary pump (170) provided in the closed circuit (120) into a reservoir (300) exclusively via a pressure-limiting valve (164) even if additional hydraulic fluid is diverted from the open circuit (100) into the closed circuit (120).

9. The method of claim 8, further comprising the step of driving at least one of the main hydraulic pump (102) and the auxiliary hydraulic pump (170) by an internal combustion engine (12).

10. The method of any one of claims 8 to 9, wherein at least one of the main hydraulic pump (102) and the auxiliary hydraulic pump (170) is a variable displacement hydraulic pump, the main and auxiliary hydraulic pumps (102, 170) having different sizes, and
further comprising the step of adjusting the displacement of the at least one variable displacement pump (102, 170) such that the necessary power is available for the hydraulic motor (146).

11. The method of any one of claims 8 to 10, wherein the hydraulic motor is configured as a variable displacement hydraulic motor (146), at least one of the main hydraulic pump (102) and the auxiliary hydraulic pump (170) is a variable displacement hydraulic pump, the main and auxiliary hydraulic pumps (102, 170) having different sizes, and
further comprising the step of adjusting the displacement of the hydraulic motor (146).

## Patentansprüche

1. Hydrostatisches Antriebssystem für ein Fahrzeug (10), umfassend:
einen offenen Schaltkreis (100) aufweisend:
einer Haupthydraulikpumpe (102), die so konfiguriert ist, dass sie von einem Verbrennungsmotor (12) angetrieben wird, und so konfiguriert ist, dass sie mindestens einen hydraulischen Verbraucher (34, 44, 50) antreibt;
einen geschlossenen Schaltkreis (120) aufweisend:
Einer Hilfshydraulikpumpe (170), die so konfiguriert ist, dass sie das Fahrzeug (10) antreibt;
einen Hydraulikmotor (146), der an die Hilfshydraulikpumpe (170) angeschlossen ist; und
ein Druckbegrenzungsventil (164), das so bemessen und konfiguriert ist, dass es die gesamte Menge der in dem geschlossenen Schaltkreis (120) bereitgestellten Hydraulikflüssigkeit, die die Höchstkapazität der Hilfspumpe (170) überschreitet, in einen Behälter (300) ablässt, selbst wenn zusätzliche Hydraulikflüssigkeit von dem offenen Schaltkreis (100) in den geschlossenen Schaltkreis (120) umgeleitet wird;
ein 2/2-Wege-Proportionalventil (118), das sowohl an den offenen Schaltkreis (100) als auch an den geschlossenen Schaltkreis (120) angeschlossen wird, wobei das 2/2-Wege-Proportionalventil (118) so konfiguriert es, dass es den offenen Schaltkreis (100) an den geschlossenen Schaltkreis (120) auf eine Weise anschließt, dass zumindest ein Teil der Hydraulikflüssigkeit, die in dem offenen Schaltkreis (100) zirkuliert, in den geschlossenen Schaltkreis (120) und den Hydraulikmotor (146) umgeleitet wird.

2. Hydrostatisches Antriebssystem für ein Fahrzeug (10) nach Anspruch 1, wobei ein einzelnes Druckbegrenzungsventil (164) als Teil einer Entlüftungsventilanordnung (144) bereitgestellt wird (144).

3. Hydrostatisches Antriebssystem für ein Fahrzeug (10) nach Anspruch 2, wobei die Entlüftungsventilanordnung (144) parallel an den Hydraulikmotor (152) angeschlossen ist und das Druckbegrenzungsventil (164) an den Behälter (300) angeschlossen ist.

4. Hydrostatisches Antriebssystem für ein Fahrzeug (10) nach Anspruch 2 oder 3, wobei die Entlüftungsventilanordnung ein Dreiwegeventil (144), das parallel zu dem Hydraulikmotor (146) angeordnet ist, und eine Drosselbohrung (165) umfasst, die an das Dreiwegeventil (144) und an das Druckbegrenzungsventil (164) angeschlossen ist.

5. Hydrostatisches Antriebssystem für ein Fahrzeug (10) nach einem der vorstehenden Ansprüche, das weiter eine elektronische Steuereinheit (320) umfasst, die an die Haupthydraulikpumpe (102), die Hilfshydraulikpumpe (170), den Hydraulikmotor (146) und das 2/2-Wege-Proportionalventil (118) angeschlossen ist, wobei die elektronische Steuereinheit so konfiguriert ist, dass sie die Haupthydraulikpumpe (102), die Hilfshydraulikpumpe (170), den Hydraulikmotor (146) und das 2/2-Wege-Proportionalventil (118) so steuert, dass eine erforderliche Leistung am Hydraulikmotor (146) zur Verfügung steht.

6. Hydrostatisches Antriebssystem für ein Fahrzeug (10) nach einem der vorstehenden Ansprüche, wobei mindestens eine von der Haupthydraulikpumpe (102) oder der Hilfshydraulikpumpe (170), als eine Verstellhydraulikpumpe konstruiert ist.

7. Hydrostatisches Antriebssystem für ein Fahrzeug (10) nach einem der Ansprüche 1-6, wobei das 2/2-Wege-Proportionalventil (118) als ein Ein-/Ausventil konfiguriert ist.

8. Ein Verfahren für das Betreiben eines Fahrzeugs (10), das die Schritte umfasst von:
Betätigung einer Haupthydraulikpumpe (102), die in einem offenen Schaltkreis (100) angeordnet ist, sodass die Hydraulikflüssigkeit in dem offenen Schaltkreis (100) zirkuliert;
Gleichzeitige Betätigung einer Hilfshydraulikpumpe (170), die in einem geschlossenen Schaltkreis (120) angeordnet ist, die einen Hydraulikmotor (146) mit Leistung versorgt;
wenn die von der Hilfshydraulikpumpe (170) bereitgestellte Leistung weniger als die erforderliche Leistung ist, Umleitung zumindest eines Teiles der in dem offenen Schaltkreis (100) zirkulierenden Hydraulikflüssigkeit in den geschlossenen Schaltkreis (120); und
Spülen der gesamten in dem geschlossenen Schaltkreis (120) bereitgestellten Hydraulikflüssigkeit, die die Höchstkapazität der Hilfspumpe (170) überschreitet, in einen Behälter (300), ausschließlich über ein Druckbegrenzungsventil (164), selbst wenn zusätzliche Hydraulikflüssigkeit von dem offenen Schaltkreis (100) in den geschlossenen Schaltkreis (120) umgeleitet wird;

9. Verfahren nach Anspruch 8, das weiter den Schritt der Betätigung mindestens einer, der Haupthydraulikpumpe (102) oder der Hilfshydraulikpumpe (170), durch einen Verbrennungsmotor (12) umfasst.

10. Verfahren nach einem der Ansprüche 8 bis 9, wobei mindestens
eine von der Haupthydraulikpumpe (102) oder der Hilfshydraulikpumpe (170), eine Verstellhydraulikpumpe ist und die Haupt- und die Hilfshydraulikpumpen (102, 170) unterschiedliche Größen haben, und
weiter umfassend den Schritt des Einstellens des Verstellens mindestens einer der Verstellpumpen (102, 170), sodass dem Hydraulikmotor (146) die notwendige Leistung zur Verfügung steht.

11. Verfahren nach einem der Ansprüche 8 bis 10,
wobei der Hydraulikmotor als ein verstellbarer Hydraulikmotor (146) konfiguriert ist, zumindest eine von der Haupthydraulikpumpe (102) oder der Hilfshydraulikpumpe (170), eine Verstellhydraulikpumpe ist und die Haupt- und die Hilfshydraulikpumpen (102, 170) unterschiedliche Größen haben, und
weiter umfassend den Schritt der Einstellung des Verstellens des Hydraulikmotors (146).

## Revendications

1. Système d'entraînement hydrostatique pour un véhicule (10), comprenant :
un circuit ouvert (100) comportant :
une pompe hydraulique principale (102) configurée pour être entraînée par un moteur à combustion interne (12), et configurée pour entraîner au moins un consommateur hydraulique (34, 44, 50) ;
un circuit fermé (120) comportant :
une pompe hydraulique auxiliaire (170) configurée pour déplacer le véhicule (10) ;
un moteur hydraulique (146) connecté à la pompe hydraulique auxiliaire (170) ; et
une soupape de limitation de pression (164) calibrée et configurée pour drainer toute quantité du fluide hydraulique dépassant la capacité maximale de la pompe auxiliaire (170) fournie dans le circuit fermé (120) à un réservoir (300) même si du fluide hydraulique supplémentaire est dévié du circuit ouvert (100) dans le circuit fermé (120) ;
une soupape proportionnelle à 2/2 voies (118) raccordée à la fois au circuit ouvert (100) et au circuit fermé (120), la soupape proportionnelle à 2/2 voies (118) étant configurée pour raccorder le circuit ouvert (100) au circuit hydraulique fermé (120) de sorte qu'au moins une partie du fluide hydraulique circulant dans le circuit ouvert (100) soit déviée dans le circuit fermé (120) et le moteur hydraulique (146).

2. Système d'entraînement hydrostatique pour un véhicule (10) selon la revendication 1, dans lequel une seule soupape de limitation de pression (164) est fournie en tant que partie d'un agencement de soupape de purge (144).

3. Système d'entraînement hydrostatique pour un véhicule (10) selon la revendication 2, dans lequel l'agencement de soupape de purge (144) est raccordé en parallèle au moteur hydraulique (152), et la soupape de limitation de pression (164) est raccordée au réservoir (300).

4. Système d'entraînement hydrostatique pour un véhicule (10) selon la revendication 2 ou 3, dans lequel l'agencement de soupape de purge comprend une soupape à trois voies (144) agencée en parallèle avec le moteur hydraulique (146), et un orifice d'étranglement (165) raccordé à la soupape à trois voies (144) et à la soupape de limitation de pression (164).

5. Système d'entraînement hydrostatique pour un véhicule (10) selon l'une quelconque des revendications précédentes, comprenant en outre une unité de commande électronique (320) connectée à la pompe hydraulique principale (102), à la pompe hydraulique auxiliaire (170), au moteur hydraulique (146), et à la soupape proportionnelle à 2/2 voies (118), l'unité de commande électronique étant configurée pour commander la pompe hydraulique principale (102), la pompe hydraulique auxiliaire (170), le moteur hydraulique (146), et la soupape proportionnelle à 2/2 voies (118) de sorte qu'une puissance requise soit disponible au niveau du moteur hydraulique (146).

6. Système d'entraînement hydrostatique pour un véhicule (10) selon l'une quelconque des revendications précédentes, dans lequel au moins l'une de la pompe hydraulique principale (102) et de la pompe hydraulique auxiliaire (170) est conçue comme une pompe hydraulique à déplacement variable.

7. Système d'entraînement hydrostatique pour un véhicule (10) selon l'une quelconque des revendications 1 - 6, dans lequel la soupape proportionnelle à 2/2 voies (118) est configurée comme une soupape tout ou rien.

8. Procédé de fonctionnement d'un véhicule (10), comprenant les étapes consistant à :
faire tourner une pompe hydraulique principale (102) agencée dans un circuit ouvert (100) de sorte que du fluide hydraulique circule dans le circuit ouvert (100) ;
faire tourner simultanément une pompe hydraulique auxiliaire (170) agencée dans un circuit fermé (120), pour alimenter en énergie un moteur hydraulique (146) ;
si l'énergie fournie par la pompe hydraulique auxiliaire (170) est inférieure à celle requise, dévier au moins une partie du fluide hydraulique circulant dans le circuit ouvert (100) dans le circuit fermé (120) ; et
évacuer toute quantité de fluide hydraulique dépassant la capacité maximale de la pompe auxiliaire (170) fournie dans le circuit fermé (120) dans un réservoir (300) exclusivement via une soupape de limitation de pression (164) même si du fluide hydraulique supplémentaire est dévié du circuit ouvert (100) dans le circuit fermé (120).

9. Procédé selon la revendication 8, comprenant en outre l'étape d'entraînement d'au moins l'une parmi la pompe hydraulique principale (102) et la pompe hydraulique auxiliaire (170) par un moteur à combustion interne (12).

10. Procédé selon l'une quelconque des revendications 8 à 9, dans lequel au moins l'une parmi la pompe hydraulique principale (102) et la pompe hydraulique auxiliaire (170) est une pompe hydraulique à déplacement variable, les pompes hydrauliques principale et auxiliaire (102, 170) ayant différentes tailles, et
comprenant en outre l'étape d'ajustement du déplacement de l'au moins une pompe à déplacement variable (102,170) de sorte que l'énergie nécessaire soit disponible pour le moteur hydraulique (146).

11. Procédé selon l'une quelconque des revendications 8 à 10, dans lequel le moteur hydraulique est configuré comme un moteur hydraulique à déplacement variable (146), au moins l'une parmi la pompe hydraulique principale (102) et la pompe hydraulique auxiliaire (170) est une pompe hydraulique à déplacement variable, les pompes hydrauliques principale et auxiliaire (102, 170) ayant différentes tailles, et
comprenant en outre l'étape d'ajustement du déplacement du moteur hydraulique (146).
